(19) **Europäisches Patentamt / European Patent Office / Office européen des brevets**

(11) **EP 4 439 897 A1**

(12) # EUROPEAN PATENT APPLICATION

(43) Date of publication:
**02.10.2024 Bulletin 2024/40**

(21) Application number: **23166138.0**

(22) Date of filing: **31.03.2023**

(51) International Patent Classification (IPC):
**H02H 3/06** (2006.01)

(52) Cooperative Patent Classification (CPC):
**H02H 3/066**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Hitachi Energy Ltd**
**8050 Zürich (CH)**

(72) Inventors:
• **PARIKH, Urmil**
**Ludvika, Dalarna, 771 32 (SE)**

• **Mehulbhai Ghanshyambhai Sonagra**
**363330 Ghanshyampur (IN)**
• **Umamahesh, Pasumarthi**
**560067 Bangalore (IN)**
• **SAHOO, Abinash**
**560048 Bangalore (IN)**
• **STANEK, Michael**
**5412 Gebenstorf (CH)**

(74) Representative: **Zacco Sweden AB**
**P.O. Box 5581**
**Löjtnantsgatan 21**
**114 85 Stockholm (SE)**

(54) **CONTROLLED SWITCHING FOR AUTO-RECLOSURE OF CIRCUIT BREAKER BASED ON COMPENSATION**

(57)    Embodiments herein provide a method (200), an intelligent electronic device, IED, and computer program product for executing auto-reclosure of a circuit breaker, CB, (110) connected to a transmission line (120). The method (200) comprises receiving (210), from at least one measuring instrument (130) connected to the transmission line (120), one or more signals representing electrical conditions of the transmission line (120). Further, the method (200) comprises determining (220), based on the received one or more signals, a degree of shunt compensation that is being applied to the transmission line (120). Furthermore, the method (200) comprises transmitting (230) a command for auto-reclosure of the CB (110) according to the determined degree of shunt compensation.

Fig. 2

FIG. 2

EP 4 439 897 A1

## Description

## TECHNICAL FIELD

The present disclosure generally relates to power system. More particularly, it relates to auto-reclosure of a circuit breaker.

## BACKGROUND

A power system is a network that involves power generation, power distribution, and power transmission. A transmission line is a component of the power system that transmits generated power to various substations and distribution transformers. Power compensation, for example, reactive power compensation in the transmitted power may be required for improving voltage profiles, power factor, stability performance, and transmission capacity. Most commonly, for reactive power compensation, a reactor/capacitor may be used, which is an absorber or supplier of reactive power. The reactor can be connected in parallel (i.e., shunt reactor), in series, or a combination of both (i.e., hybrid).

When the transmission line is energized at random phase instant, current starts to flow after pre-strikes in poles of a circuit breaker, CB, present in the transmission line. The pre-strikes can cause undesirable overvoltage produced by a propagation of electromagnetic waves along the transmission line, generally called traveling wave phenomena. This phenomenon is initiated by the voltage across the CB at the instant of current inception (pre-arc voltage).

If the transmission line is highly compensated (series/shunt/hybrid), then energizing or fast re-energizing the CB near gap voltage zero may lead to a high DC component of the current and may cause sympathetic inrush currents and/or temporary overvoltage in conjunction with nearby power transformers. In some case, the overvoltage may not be critical to the power transformers, but that the DC current could drive the nearby power transformers into saturation, causing temporary overvoltage that might jeopardize system stability. Also, a charging current of the transmission line may be almost pure DC with no natural current zeros for a long time. Any tripping on such current may destroy the CB.

When energizing a shunt compensated transmission line near voltage zero, the charging current may initially have the high DC component. Further, if the shunt compensated transmission line is energized near voltage peak, the overvoltage may be consistently high in all phases. The shunt reactor at the far end of the line somewhat dampens the over voltage but only by a few percentage.

## SUMMARY

If all the reactors used for the power compensation are permanently connected and have a fixed degree of shunt compensation, then a fixed switching strategy can be used for energizing the compensated transmission line. If the degree of shunt compensation is varying, then it is very important to know the degree of shunt compensation present in the compensated transmission line, in order to estimate a closing strategy for the CB present in the compensated transmission line.

Most of cases, all the reactor topology information is not available, or the degree of total compensation are unknown at substation during an auto-(re)closure operation of the CB. Therefore, it is difficult to know whether there is compensation present in the transmission line or not, and further it is difficult to estimate the degree of shunt compensation in each fast auto re-closure operation of the CB.

Consequently, there is a need for a system that may estimate the degree of shunt compensation and accordingly enabling auto-reclosure of the CB that alleviates at least some of the above-cited problems.

It is therefore an object of the present disclosure to provide a method, an intelligent electronic device, IED, and a computer program product for enabling auto-reclosure of a circuit breaker, CB, connected in a compensated transmission line, to mitigate, alleviate, or eliminate all or at least some of the above-discussed drawbacks of presently known solutions.

This and other objects are achieved by means of a method, an intelligent electronic device, IED, and a computer program product as defined in the appended claims. The term exemplary is in the present context to be understood as serving as an instance, example or illustration.

According to a first aspect of the present disclosure, a method for controlling auto-reclosure of a circuit breaker, CB, connected to a transmission line is provided. The method comprises receiving from at least one measuring instrument connected to the transmission line, one or more signals representing electrical conditions of the transmission line. The method comprises determining, based on the received one or more signals, a degree of shunt compensation that is being applied to the transmission line; and transmitting a command for auto-reclosure of the CB according to the determined degree of shunt compensation.

Advantageously, enabling auto-reclosing of the CB based on the degree of shunt compensation may dampen overvoltage in the compensated transmission line, which may be present in the compensated transmission line due to closing of the CB without knowing the degree of shunt compensation present in the transmission line.

In some embodiments, the method further comprises determining, in accordance with the degree of shunt compensation, an instant based on a determined time delay at which the auto-reclosure of the CB is to be executed.

Advantageously, transmission of the command for auto-reclosure of the CB at the instant based on the determined time delay may enable the CB to get in synchronization with a waveform of a voltage or current present in the shunt compensated transmission line. Thereby, dampening the overvoltage in the compensated transmission line and providing a protection to the CB.

In some embodiments, wherein determining the degree of shunt compensation comprises evaluating a dominating oscillation frequency of a line side voltage of the CB.

In some embodiments, the dominating oscillation frequency is evaluated after secondary arc in a faulty phase of the transmission line is quenched.

In some embodiments, the degree of shunt compensation is determined based on the dominating oscillation frequency of the measured signal and a system power frequency.

In some embodiments, determining the degree of shunt compensation comprises identifying a time difference between at least two zero crossings of the measured signal.

In some embodiments, the time delay is a delay after one of a voltage zero crossing or a peak voltage across the CB.

In some embodiments, the signals comprise at least one of a current signal and a voltage signal, and wherein the measuring instrument is deployed to measure one or more of a gap voltage across the CB, a source voltage, a line side voltage, or a current in the transmission line.

In some embodiments, the time delay is determined in reference to a lookup table comprising a plurality of predetermined thresholds defining the degree of shunt compensation.

In some embodiments, the time delay is determined using an algebraic function of the degree of shunt compensation.

According to a second aspect of the present disclosure, an intelligent electronic device, IED, associated with a transmission line is provided. The IED comprises a controlling module adapted for controlling at least one measuring instrument connected to the transmission line to measure one or more signals representing electrical conditions of the transmission line. The IED further comprises a transceiver adapted for receiving from the at least one measuring instrument, the measured one or more signals representing the electrical conditions of the transmission line. Further, the IED comprises a determination module adapted for determining, based on the received one of more signals, a degree of shunt compensation that is being applied to the transmission line, wherein the transceiver is further adapted for transmitting, according to the determined degree of shunt compensation, a command for auto-reclosure of a circuit breaker, CB, connected to the transmission line. Thus, resulting in a safe reclosure of the CB, which may protect the compensated transmission line and the CB in the compensated transmission line.

According to a third aspect of the present disclosure, there is provided a computer program product comprising a non-transitory computer readable medium, having thereon a computer program comprising program instructions. The computer program is loadable into a data processing unit and configured to cause execution of the method according to the first aspect when the computer program is run by the data processing unit.

In some embodiments, any of the above aspects may additionally have features identical with or corresponding to any of the various features as explained above for any of the other aspects.

Other advantages may be readily apparent to one having skill in the art. Certain embodiments may have some, or all of the recited advantages.

## BRIEF DESCRIPTION OF THE DRAWINGS

The foregoing will be apparent from the following more particular description of the example embodiments, as illustrated in the accompanying drawings in which like reference characters refer to the same parts throughout the different views. The drawings are not necessarily to scale, emphasis instead being placed upon illustrating the example embodiments.

Fig. 1      discloses a schematic diagram of an example power system transmission line;

Fig. 2      is a flowchart illustrating example method steps;

Fig. 3      is a schematic block diagram illustrating an example intelligent electronic device;

Figs. 4a-4c      disclose waveforms depicting variation of voltage with respect to time according to some examples; and

Fig. 5      discloses an example computing environment.

## DETAILED DESCRIPTION

Aspects of the present disclosure will be described more fully hereinafter with reference to the accompanying drawings. The method and device disclosed herein can, however, be realized in many different forms and should not be construed as being limited to the aspects set forth herein. Like numbers in the drawings refer to like elements throughout.

The terminology used herein is for the purpose of describing particular aspects of the disclosure only and is not intended to limit the invention. It should be emphasized that the term "comprises/comprising" when used in this specification is taken to specify the presence of stated features, integers, steps, or components, but does not preclude the presence or addition of one or more other features, integers, steps, components, or groups thereof. As used herein, the singular forms "a", "an" and "the" are intended to include the plural forms as well, unless the context clearly indicates otherwise.

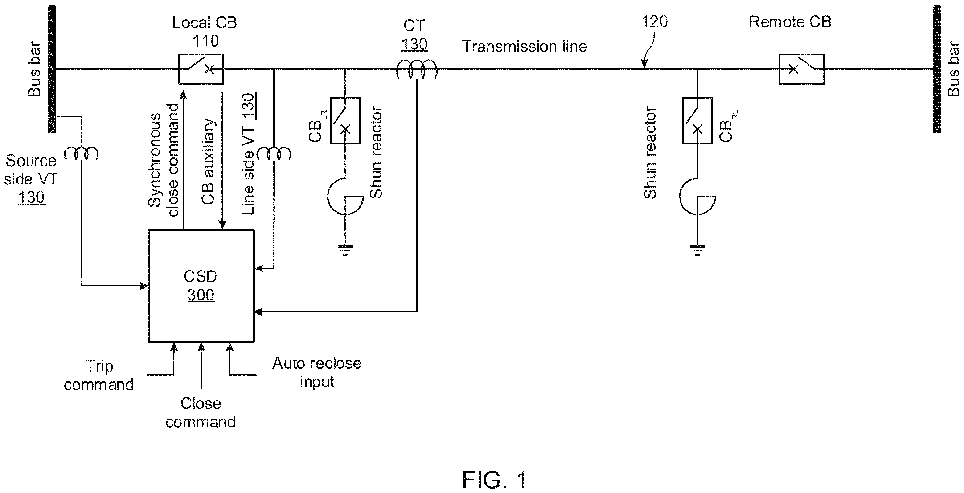

Fig. 1 discloses a schematic diagram of an example power system transmission line 120. The transmission line 120 referred herein may be adapted for transmission of power. The transmission line 120 is either compensated with some degree of compensation or not being compensated (i.e., zero degree of compensation). The compensation may be a shunt compensation, a series compensation, or a combination of both, i.e. Hybrid Series-Shunt Compensator, HSSC. For simplicity, a shunt compensated transmission line is depicted in Fig. 1, however it should be noted that any of the three compensations may be considered.

As depicted in Fig. 1, the transmission line 120 comprises one or more switching devices. Examples of the switching devices may include, but are not limited to, disconnectors, load-break switches, switch disconnectors, fuses, or circuit breakers, CBs, 110. The switching devices may be installed at various points in the transmission line 120. More specifically, the CBs 110 may be arranged at the local end of the transmission line 120, as depicted in Fig. 1. Calculation of the compensation is performed by voltage measurement derived from the local end/line side of CB 110 in the transmission line 120. However, it is understood that the CBs 110 may be arranged at a remote end of the transmission line 120, or anywhere in the transmission line 120 depending on requirement and various signals associated with the transmission line. The CB 110 may be used to isolate the transmission line 120 from its respective bus bar.

If the degree of shunt compensation of the transmission line 120 is high, then energizing or fast re-energizing/reclosure of the CB 110 (or any other similar switching device) near gap voltage zero may lead to a high DC component of current, which may cause delayed or missing zeroes of the current through the CB 110. As a CB normally interrupts the current at a natural zero crossing, missing current zeroes may lead to CB failure due to overly long arcing times. Therefore, it is essential to consider a degree of shunt compensation for energizing or fast reclosure for the CB 110 in the compensated transmission line. However, in the prior art, the information regarding the degree of shunt compensation may not be considered for energizing or fast reclosure of the CB 110. Thus, fast reclosure of the CB 110 without considering the degree of shunt compensation may damage the CB 110.

Therefore, according to embodiments of the present disclosure, an intelligent electronic device, IED 300 is provided, which implements a method for enabling auto-reclosure of the CB 110 connected in the transmission line 120.

As depicted in Fig. 1, the IED 300 is connected to the CB 110 and one or more measuring instruments 130 adapted to acquire electrical conditions on the transmission line 120. The one or more measuring instruments 130 referred herein may be voltage measurement devices, current measurement devices, or the like. Each of the measuring instrument 130 may include, but is not limited to, a current transformer, CT, and a voltage transformer, VT. As would be understood, a type and a number of the measuring instruments 130 vary based on the signals representing electrical conditions associated with transmission line 120 or any other similar parameters.

In some examples, the measuring instruments 130 may be arranged on a source side and a line side of the transmission line 120. For example, the IED 300 may be connected to the one or more voltage measurement devices on the source side and the line side, for receiving measured voltage readings. Similarly, the IED 300 may be connected to the one or more current measurement devices for monitoring current passing through the transmission line 120 or through a shunt reactor (number?) or any other device connected to the transmission line 120. The IED 300 may use a CB auxiliary to obtain a status (for example, opening operation, closing operation, or the like) of the CB 110 or of a switching device connected to a shunt reactor, or of any other device connected to the transmission line 120. The IED 300 may also receive a trip input, auto reclose input and a close command from one or more external devices (not shown). The external devices may be or may not be part or the transmission line 120.

According to embodiments disclosed herein, the IED 300 receives, from the at least one measuring instrument 130 in the transmission line 120, one or more signals representing electrical conditions of the transmission line 120. Based on the received one or more signals, the IED 300 determines a degree of shunt compensation that is being applied to the transmission line 120.

According to the determined degree of shunt compensation, the IED 300 transmits a command for executing the auto-reclosure of the CB 110. The auto-reclosure of the CB at the instant is automated and can be reconfigured by a user. For example, when the remote CB 110 is opened, the IED 300 may close or (re)close the local CB 110 onto the transmission line 120.

In some embodiments, the IED 300 may also determine, based on the degree of shunt compensation, an instant at which the auto-reclosure of the CB 110 is to be executed. Thus, the command may be transmitted at the determined instant, which is indicative of a phase angle of voltage or current in the transmission line 120. As a result, the CB 110 may be closed safely thereby avoiding delayed or missing zeroes in the current through the CB 110 and/or minimizing the switching overvoltages on the transmission line 120.

Various embodiments for enabling auto-reclosure of the CB 110 are explained in conjunction with figures in the later parts of the description.

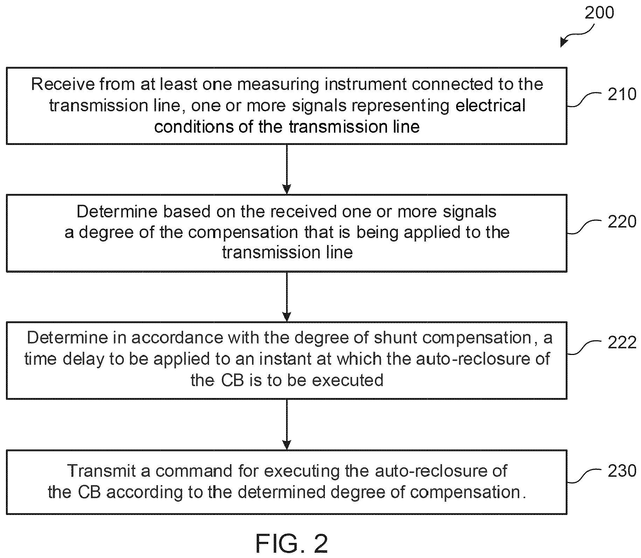

Fig. 2 is a flowchart illustrating example method steps of a method 200 performed for enabling auto-reclosure of a circuit breaker, CB, connected in a compensated transmission line. The method 200 is performed by an intelligent electronic device, IED associated with the compensated transmission line.

At step 210, the method 200 comprises receiving, from one or more measuring instruments connected to the transmission line, one or more signals representing electrical conditions of the transmission line. The one or more signals may be associated with the transmission line and the power being transmitted in the transmission line. Examples of the one or more signals may include, but are not limited to, Voltage, Current, Resistance, Capacitance, Inductance, Impedance, or the like. The one or more signals associated with the transmission line may be measured using the corresponding measuring instruments that may include, but is not limited to, a current transformer, CT, and a voltage transformer, VT. The measuring instrument is deployed to measure one or more of a gap voltage across the CB (110), a source voltage, a line side voltage, or a current in the transmission line (120) or in any device connected to the transmission line (120) such as a shunt reactor.

At step 220, the method 200 comprises determining, based on the received one or more signals, a degree of shunt compensation that is being applied to the transmission line.

In some examples, the compensation may be a shunt compensation, a series compensation, or a combination of both, i.e. Hybrid Series-Shunt Compensator HSSC. The compensation may be used to improve a power flow or the voltage profile in the transmission line. Series compensation may improve a system voltage by connecting a capacitor or an inductor in series with the transmission line. Shunt compensation may improve the system voltage by connecting a reactor in parallel with the transmission line. Hybrid compensation is a combination of the series and shunt compensation. The degree of the shunt compensation may be represented as

$$k = \frac{X_C}{X_L}$$

, where $X_C$ is the reactance of the total equivalent capacitance and $X_L$ is the reactance of the total equivalent inductance of the compensated line including capacitive and inductive devices.

At step 222, the method 200 comprises determining, in accordance to the degree of shunt compensation, an instant at which the auto-reclosure of the CB is to be executed. The instant at which the auto-reclosure of the CB is to be executed may be based on a time delay determined from the degree of shunt compensation. The time delay is a delay from one of a voltage zero crossing or a peak voltage across the CB. The voltage across the CB (110) may be received from the at least one measuring instrument, or derived from the received electrical conditions of the transmission line. For example, the voltage across the CB (110) may be determined from a source voltage and a voltage on the transmission line (120). The determined instant may be indicative of a phase angle or a time instant at which the auto-reclosure of the CB (110) is to be executed, and wherein a reference of the phase angle is based on a selected phase angle of a source side voltage or the gap voltage across the CB (110). The time delay may be determined in reference to a lookup table comprising a plurality of predetermined thresholds defining the degree of shunt compensation. Further, in an embodiment, the time delay may be determined using an algebraic function associated with the degree of shunt compensation. For example, a first time delay may be applied when the line is uncompensated, a second delay may be applied when the degree of shunt compensation is above zero but less than a first threshold, and a third delay may be applied when the degree of shunt compensation is equal or above the first threshold. In some embodiments, the determination of the degree of shunt compensation may comprise evaluating a dominating oscillation frequency from one or more signals representing electrical conditions of the transmission line. For example, the degree of shunt compensation may be determined from a line side voltage or gap voltage of the CB or from the current in the transmission line.

The evaluation of the dominating oscillation frequency may be performed only after a secondary arc in a faulted phase of the transmission line is quenched. Otherwise, evaluating the signals while a secondary arc is still present may lead to wrong estimation of degree of shunt compensation. The secondary arc may be an electrical arc that may occur in one or more faulted phases of a multi-phase transmission line because of electromagnetic and electrostatic coupling from other energized phases of the transmission line or from an adjacent parallel transmission line. The dominating oscillation frequency may be estimated by using gap voltage also. For gap voltage case, the method may include filtering out the system power frequency first and then finding the dominating oscillation frequency present in the remaining signal. Further, the degree of shunt compensation may be determined based on mathematical operations involving the dominating oscillation frequency of the measured signal and a system power frequency.

The degree of shunt compensation may be determined from a ratio of the dominating oscillation frequency and a system power frequency of the transmission line. Usually, the degree of shunt compensation is defined as

$$k = \left(\frac{f_d}{f_p}\right)^2,$$

Where $f_d$ is the dominating oscillation frequency and
$f_p$ is the system power frequency.

The dominating oscillation frequency is a frequency detected to be present in a voltage waveform of the transmission line, and the system power frequency is the actual or nominal frequency of the electrical system, for example of the power bus bar. In an example, the dominating oscillation frequency is determined from analysis of a load voltage or a gap voltage waveform.

Optionally, the determination of the degree of shunt compensation may comprise identifying a time difference between at least two zero crossings of the measured signal. In an example, determining (220) the degree of shunt compensation comprises identifying the time difference between the at least two zero voltage crossings of the line side voltage of the CB in the transmission line. The zero voltage crossing may be the phase angle at which there is no voltage present in the transmission line. The determined degree of shunt compensation may be considered zero or nearly equal to zero, i.e. low, if the identified time difference exceeds a predetermined threshold value. However, the determined degree of shunt compensation may be considered to be greater than zero, i.e. medium or high, if the time difference does not exceed the threshold.

The degree of shunt compensation may be determined by the IED (300). The degree of shunt compensation may also be determined by an external device and transmitted to the IED (300). The degree of shunt compensation may also be determined from a setting in the IED (300).

The degree of shunt compensation may also be determined from a status of one or more switching devices controlling other equipment, for example shunt reactors, connected to the transmission lines. The degree of shunt compensation may also be entered into the IED (300) by a user.

At step 230, the method 200 further comprises transmitting a command for executing the auto-reclosure of the CB according to the determined degree of shunt compensation. Based on the degree of shunt compensation, an instant is determined, the instant based on a determined time delay at which the auto-reclosure of the CB (110) is to be executed. In an embodiment, when the degree of shunt compensation is determined to be less than a first threshold, the time delay for executing the auto-reclosure of the CB (110) is determined to be a first value. When the degree of shunt compensation is determined to be greater than a second threshold, the time delay for executing the auto-reclosure of the CB (110) is determined to be a second value that may be larger than the first value. Further, when the degree of shunt compensation is determined to be greater than the first threshold and less than the second threshold, the time delay for executing the auto-reclosure of the CB (110) is determined as a third value that may be larger than the first value and smaller than the second value. For example, but not limited to, if the degree of shunt compensation is more than 77%, the auto-reclosure of the CB is executed at 63 degrees after gap voltage zero. If the degree of shunt compensation is between 50% to 77%, the auto-reclosure of the CB is executed at 45 degrees; otherwise, the auto-reclosure of the CB is executed at the gap voltage zero or in proximity of the gap voltage zero.

In some embodiments, the command may be executed for auto-reclosure of the CB to occur at the zero voltage crossing or in proximity of the zero voltage crossing, if the determined degree of shunt compensation is zero. If the zero crossing at load side voltage is not seen for pre-defined time duration, then there is absence of shunt compensation on the transmission line and accordingly, executing the auto-reclosure of the CB to occur at the voltage zero crossing or in proximity of the voltage zero crossing across the CB.

In some embodiments, based on the determined degree of shunt compensation being greater than zero, the command may be executed for auto-reclosure of the CB to occur at a second time delay from a voltage zero crossing or voltage peak across the CB. The determined degree of shunt compensation is considered greater than zero if the time difference between zero crossings does not exceed the threshold.

Thus, reclosure of the CB may be executed depending on the degree of shunt compensation associated with the transmission line. Advantageously, the DC component of the CB current may be reduced to protect the CB, and overvoltages in the compensated transmission line may be minimized to reduce the electrical stress on the insulation.

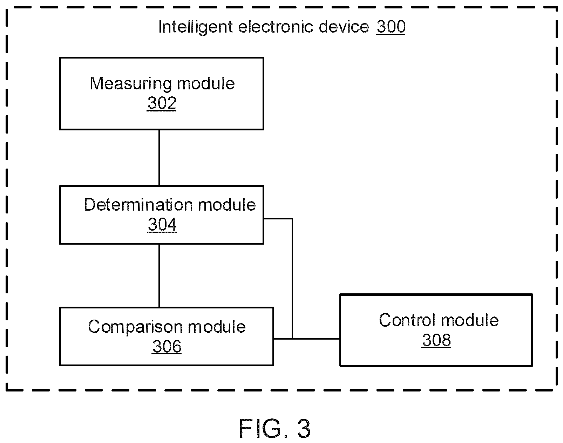

Fig. 3 illustrates an intelligent electronic device, IED, 300 associated with circuit breaker arranged to switch a transmission line. In some examples, the transmission line may be uncompensated (zero degree of compensation) or compensated, wherein the compensation may be one of: a shunt compensation, a series compensation, and a Hybrid series & shunt compensation. The IED 300 is capable of executing auto-reclosure of a circuit breaker, CB, connected in the transmission line.

The IED 300 comprises a measuring module 302, a determination module 304, and a control module 308. The IED 300 may also comprise a comparison module 306.

The measuring module 302 is configured to receive signals from one or more measuring instruments in the transmission line to measure one or more electrical conditions of the transmission line. The one or more electrical conditions are associated with the transmission line and the power being transmitted in the transmission line. Examples of the one or more electrical conditions may include, but are not limited to, Voltage, Current, Resistance, Capacitance, Inductance, Impedance, or the like. The one or more electrical conditions associated with the transmission line may be measured using the corresponding measuring instruments that may include but are not limited to a current transformer, CT, and a voltage transformer, VT. The measuring instrument is deployed to measure one or more of a gap voltage across the CB (110), a source voltage, a line side voltage, or a current in the transmission line (120) or in any device connected to the transmission line (120).

The determination module 304 is configured to perform steps of determining, based on the received one or more signals, a degree of shunt compensation that is being applied to the transmission line. The degree of shunt compensation may be represented as $k = \frac{X_C}{X_L}$, where $X_C$ is the reactance of the total equivalent capacitor and $X_L$ is the reactance of the total equivalent inductance. As the reactances $X_C$ and $X_L$ are usually not directly available and may change in service, the degree of shunt compensation may be determined from the measured electrical conditions on the transmission line, using the methods described above.

The determination module 304 is further adapted for determining, in accordance to the degree of shunt compensation, an instant based on a determined time delay at which the auto-reclosure of the CB is to be executed. The time delay is a delay after one of a voltage zero crossing or a peak voltage across the CB. The determined instant is indicative of a degree of a phase angle or a time instant at which the auto-reclosure of the CB (110) is to be executed, and wherein a reference of the degree of the phase angle is based on a source side measuring instrument or the gap voltage across the CB (110). The time delay may be determined in reference to a lookup table comprising a plurality of predetermined thresholds defining the degree of shunt compensation. Further, in an embodiment, the time delay may be determined using an algebraic function associated with the degree of shunt compensation.

In some embodiments, the determination of the degree of shunt compensation may comprise evaluating a dominating oscillation frequency of a line side voltage of the CB. The evaluation of the dominating oscillation frequency may be performed only after a secondary arc in a faulted line of the transmission line is quenched. Otherwise, it may lead to wrong estimation of degree of shunt compensation. The secondary arc may be an arc that may flow in a faulted line of a multiphase transmission line because of electromagnetic and electrostatic coupling from other healthy phases of the transmission line. The dominating oscillation frequency may be estimated by using gap voltage also. For gap voltage case, filter out the system power frequency first and then find the dominating oscillation frequency present in signal. Further, the degree of shunt compensation may be determined based on the dominating oscillation frequency of the measured signal and a system power frequency.

The degree of shunt compensation may be determined as a ratio of the dominating oscillation frequency and system power frequency of the transmission line. The dominating oscillation frequency is a frequency detected to be present in a voltage waveform of the transmission line, and the system power frequency is the actual frequency of the transmission line. In an example, the dominating oscillation frequency is determined from analysis of a load voltage or a gap voltage waveform.

In some examples, the determination of the degree of shunt compensation may comprise identifying a time difference between at least two zero voltage crossings of a line side voltage of the CB in the transmission line. The zero voltage crossing is the phase angle at which there is no voltage present in the transmission line. The comparison module 306 is configured to compare the identified time with a predetermined threshold value. The determined degree of shunt compensation is considered zero or nearly equal to zero, i.e. low, if the identified time difference exceeds the predetermined threshold value. However, the determined degree of shunt compensation is considered to be greater than zero, i.e. medium or high, if the time difference does not exceed the threshold.

The determination module 304 is further configured to perform step of determining, based on the degree of shunt compensation, an instant at which the auto-reclosure of the CB is to be enabled thereby transmitting the command at the determined instant. This instant indicates a phase angle of voltage present in the transmission line.

The control module 308 is configured to transmit a command for executing the auto-reclosure of the CB at the instant determined according to the determined degree of shunt compensation. For example, when the degree of shunt compensation is determined to be less than a first threshold, the time delay for executing the auto-reclosure of the CB (110) is determined to be a first value. When the degree of shunt compensation is determined to be greater than a second threshold, the time delay for executing the auto-reclosure of the CB (110) is determined to be a second value that may be larger than the first value. Further, when the degree of shunt compensation is determined to be greater than the first threshold and less than the second threshold, the time delay for executing the auto-reclosure of the CB (110) is determined as a third value that may be larger than the first value and smaller than the second value. For example, but not limited to, if the degree of shunt compensation is more than 77%, auto-reclosure of the CB is executed to occur at 63 degrees after gap voltage zero. If the degree of shunt compensation is between 50% to 77%, auto-reclosure of the CB is executed to occur at 45 degrees; otherwise auto-reclosure of the CB is executed to occur at the gap voltage zero or in proximity of the gap voltage zero.

In some examples, the control module 308 may transmit the command such that auto-reclosure of the CB is executed to occur at the zero voltage crossing or in proximity of the zero voltage crossing, if the determined degree of shunt compensation is zero or almost zero. The degree of shunt compensation is determined as zero or almost zero if the time between consecutive zero crossings of the load side voltage exceeds a pre-defined threshold or no zero crossings are detected for a pre-defined time duration.

In some examples, based on the determined degree of shunt compensation being greater than zero, the command is transmitted by the control module 308 such that auto-reclosure of the CB is executed to occur at a time delay after the voltage zero crossing. The determined degree of shunt compensation is considered greater than zero if the time difference between zero crossings does not exceed the threshold.

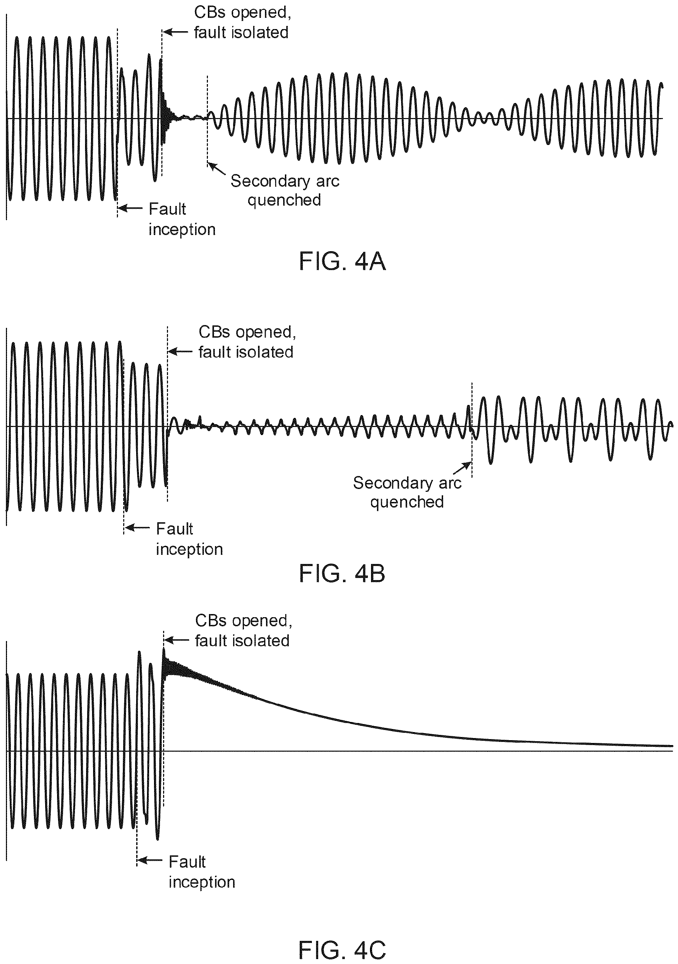

Figs. 4A-4C describe a waveform of the voltage on a shunt compensated transmission line in a voltage-time graph. Fig.4A discloses an example case where two shunt reactors are permanently connected to a transmission line involving a high degree of shunt compensation. According to an example, the dominant oscillation frequency in the transmission line is 47.43 Hz. Based on the dominant oscillation frequency present in the transmission line and the measured one or more signals, the total degree of compensation in the transmission line is calculated to be 90%. Based on this calculated degree of compensation, a command for executing the auto-reclosure of the CB is transmitted. In an example, if the degree of compensation is calculated to be more than 77%, the auto-reclosure is delayed by 63 degrees after a gap voltage zero.

After tripping of the CB, if the CB is reclosed at the gap voltage zero, the current flowing through the CB may have a DC offset. If the DC offset is high, the resulting asymmetrical current may have no current zeros for a prolonged time. Therefore, if such a situation occurs, the CB may not be able to interrupt the current, which may lead to failure of the CB. Although energizing or re-energizing the CB at gap voltage zero may minimize the overvoltage, it may also increase the risk of missing current zeros.

Fig.4A discloses voltage that appears in one of the phases of the transmission line that is subject to an earth fault. Initially, the transmission line is energized with a nominal voltage. However, when the fault occurs in the transmission line, the voltage collapses. Protection operates and the CB trips clearing the fault, as shown in Fig. 4A. There is still a secondary arc present in the transmission line (manifested by a different wave shape in Fig. 4A).

When the CB is re-closed after a fault, a transient effect is generated in the transmission line. The transient effect may be one or more of an overvoltage along the transmission line depending on the phase angle at which the CB is closed, or an inrush current depending on the phase angle at which the CB is closed. In order to minimize one or more of these transient effects, the CB is closed at a phase angle such as to minimize the transient effects. A prediction of the instant at which the CB should be closed is required and determined based on the calculation of the degree of shunt compensation.

Samples of the voltage waveform present in the transmission line are collected using one or more instruments installed in the transmission line. These samples are analysed using one or more technical methods. The technical method could be, for example a matrix pencil algorithm. The samples are analysed to determine individual components of the voltage waveform, which is a compound of various sinusoidal components with different frequencies, different phase angles, and different rate of decays. An ideal instant at which the CB should be closed or re-closed is determined based on the analysis of the samples.

After the CBs at both ends of the transmission line have interrupted the fault current, current may still persist in the fault path due to capacitive and magnetic coupling from the healthy phases of the same line or from another adjacent transmission lines running in parallel.

Fig.4B discloses an example case where one of the shunt reactors is opened along with the main line breaker due to fault on the transmission line, resulting in a low degree of shunt compensation. According to an example, the dominant oscillation frequency in the transmission line is 33.54 Hz. Based on the dominant oscillation frequency present in the transmission line and the measured one or more signals, the total compensation in the transmission line is calculated to be 45%. Based on this calculated degree of shunt compensation, a command is transmitted to execute auto-reclosure of the CB shortly after gap voltage zero with minimal delay time.

Fig.4C discloses another example case where both of the shunt reactors are opened along with the main line breaker due to fault on one of the phase, resulting in an uncompensated transmission line. The load voltage did not see zero crossing for a long duration (as indicated in Fig. 4C), which is interpreted as zero (negligible) degree of shunt compensation. If the degree of shunt compensation is calculated to be negligible or zero, the auto-reclosure is ideally executed at the gap voltage zero or in proximity of the gap voltage zero.

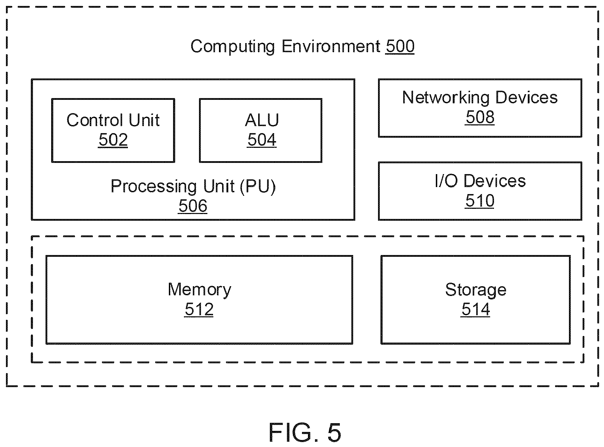

Fig. 5 illustrates an example computing environment 500 implementing a method and the IED, as described in Figs. 2 and 3. As depicted in Fig. 5, the computing environment 500 comprises at least one processing unit 506 that is equipped with a control unit 502 and an Arithmetic Logic Unit (ALU) 504. The computing environment 500 further comprises at least one networking devices 508 and a plurality of Input output, I/O devices 510, a memory 512, and a storage 514. The processing unit 506 may be responsible for implementing the method described in Fig. 2. For example, the processing unit 506 may in some embodiments be equivalent to the CPU/processor/control module of the IED described above in conjunction with Fig. 3. The processing unit 506 is capable of executing software instructions stored in the memory 512 or in the storage 514. The processing unit 506 receives commands from the control unit 502 in order to perform its processing. Further, any logical and arithmetic operations involved in the execution of the instructions are computed with the help of the ALU 504. The computer program is loadable into the processing unit 506, which may, for example, be comprised in an electronic apparatus (such as an IED). When loaded into the processing unit 506, the computer program may be stored in the memory 512 associated with or comprised in the processing unit 506. According to some embodiments, the computer program may, when loaded into and run by the processing unit 506, cause execution of method steps according to, for example, any of the methods illustrated in Fig. 2 or otherwise described herein. The overall computing environment 500 may be composed of multiple homogeneous and/or heterogeneous cores, multiple CPUs of different kinds, special media and other accelerators. Further, the plurality of processing unit 506 may be located on a single chip or over multiple chips. The algorithm comprising of instructions and codes required for the implementation are stored in either the memory 512 or the storage 514 or both. At the time of execution, the instructions may be fetched from the corresponding memory 512 and/or storage 514, and executed by the processing unit 506. In case of any hardware implementations, various networking devices 508 or external I/O devices 510 may be connected to the computing environment to support the implementation through the networking devices 508 and the I/O devices 510. The embodiments disclosed herein can be implemented through at least one software program running on at least one hardware device and performing network management functions to control the elements. The elements shown in Fig. 5 include blocks which can be at least one of a hardware device, or a combination of hardware device and software module.

**Claims**

1. A method (200) for controlling auto-reclosure of a circuit breaker, CB, (110) connected to a transmission line (120), the method (200) comprising:

   receiving (210), from at least one measuring instrument connected to the transmission line (120), one or more signals representing electrical conditions of the transmission line (120);
   determining (220), based on the received one or more signals, a degree of shunt compensation that is being applied to the transmission line (120); and
   transmitting (230) a command for auto-reclosure of the CB (110) according to the determined degree of shunt compensation.

2. The method (200) according to claim 1, further comprising:
   determining (222), in accordance with the degree of shunt compensation, a time delay to be applied to an instant at which the auto-reclosure of the CB (110) is to be executed.

3. The method (200) according to any of the preceding claims, wherein determining (220) the degree of shunt compensation comprises evaluating a dominating oscillation frequency of the received one or more signals.

4. The method (200) according to claim 3, wherein the dominating oscillation frequency is evaluated after a secondary arc in a faulty phase of the transmission line (120) is quenched.

5. The method (200) according to any of the preceding claims, wherein the degree of shunt compensation is determined based on the dominating oscillation frequency of the measured signal and a system power frequency.

6. The method (200) according to any of the preceding claims, wherein the step of determining (220) the degree of shunt compensation comprises identifying a time difference between at least two zero crossings of the measured signal.

7. The method (200) according to any of the preceding claims, wherein the time delay is a delay from one of a voltage zero crossing or a peak voltage across the CB (110).

8. The method (200) according to any of the preceding claims, wherein the signals comprise at least one of a current signal and a voltage signal, and wherein the measuring instrument is deployed to measure one or more of a gap voltage across the CB (110), a source voltage, a line side voltage, or a current in the transmission line (120).

9. The method (200) according to any of the preceding claims, wherein the time delay is determined in reference to a lookup table comprising a plurality of predetermined thresholds defining the degree of shunt compensation.

10. The method (200) according to any of the preceding claims, wherein the time delay is determined using an algebraic function of the degree of shunt compensation.

11. An intelligent electronic device, IED, (300) configured to be connected to a circuit breaker, CB (110), arranged to switch a transmission line (120), the IED (300) comprising:

    a measuring module (302) adapted for receiving (210), from at least one measuring instrument (130) connected to the transmission line (120), one or more signals representing electrical conditions of the transmission line (120); and
    a determination module (304) adapted for determining (220), based on the received one or more signals, a degree of shunt compensation that is being applied to the transmission line (120); and
    a control module (308) adapted for transmitting (230), according to the determined degree of shunt compensation, a command for auto-reclosure of the CB, (110) connected to the transmission line (120).

12. The IED (300) according to claim 11, wherein the determination module (304) is further adapted for determining (222), in accordance to the degree of shunt compensation, a time delay to be applied to an instant at which the auto-reclosure of the CB (110) is to be executed.

13. The IED (300) according to any of the claims 11 or 12, wherein determining the degree of shunt compensation comprises evaluating a dominating oscillation frequency of the received one or more signals, and wherein the dominating oscillation frequency is evaluated after a secondary arc in a faulty phase of the transmission line (120) is quenched.

14. The IED (300) according to any of the claims 11-13, wherein the degree of shunt compensation is determined based on the dominating oscillation frequency of the measured signal and system power frequency.

15. A computer program product comprising a non-transitory computer readable medium, having thereon a computer program comprising program instructions, the computer program is loadable into a data processing unit and configured to cause execution of the method according to any of claims 1 through 10 when the computer program is run by the data processing unit.

FIG. 1

200

Receive from at least one measuring instrument connected to the transmission line, one or more signals representing electrical conditions of the transmission line ⟋ 210

Determine based on the received one or more signals a degree of the compensation that is being applied to the transmission line ⟋ 220

Determine in accordance with the degree of shunt compensation, a time delay to be applied to an instant at which the auto-reclosure of the CB is to be executed ⟋ 222

Transmit a command for executing the auto-reclosure of the CB according to the determined degree of compensation. ⟋ 230

FIG. 2

Intelligent electronic device 300

Measuring module
302

Determination module
304

Comparison module
306

Control module
308

FIG. 3

FIG. 4A

FIG. 4B

FIG. 4C

Computing Environment 500

Control Unit
502

ALU
504

Processing Unit (PU)
506

Networking Devices
508

I/O Devices
510

Memory
512

Storage
514

FIG. 5

Europäisches
Patentamt

European
Patent Office

Office européen
des brevets

# EUROPEAN SEARCH REPORT

**Application Number**

EP 23 16 6138

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PATRICIA MESTAS ET AL: "Implementation and Performance Evaluation of a Reclosing Method for Shunt Reactor-Compensated Transmission Lines", IEEE TRANSACTIONS ON POWER DELIVERY, IEEE SERVICE CENTER, NEW YORK, NY, US, vol. 26, no. 2, 1 April 2011 (2011-04-01), pages 954-962, XP011351208, ISSN: 0885-8977, DOI: 10.1109/TPWRD.2010.2084111 | 1-3,6-8, 11,12,15 | INV. H02H3/06 |
| Y | * the whole document * | 1,3-5, 9-11, 13-15 | |
| A | CN 102 412 548 B (UNIV KUNMING SCIENCE & TECH) 1 October 2014 (2014-10-01) * the whole document * | 1-15 | |
| Y | US 2005/195538 A1 (KHOROSHEV MARK I [US] ET AL) 8 September 2005 (2005-09-08) * the whole document * | 1,3-5, 9-11, 13-15 | |

TECHNICAL FIELDS
SEARCHED (IPC)

H02H

The present search report has been drawn up for all claims

| Place of search | Date of completion of the search | Examiner |
|---|---|---|
| Munich | 12 September 2023 | Trifonov, Antoniy |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

......................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 16 6138

This annex lists the patent family members relating to the patent documents cited in the above-mentioned European search report.
The members are as contained in the European Patent Office EDP file on
The European Patent Office is in no way liable for these particulars which are merely given for the purpose of information.

12-09-2023

| Patent document cited in search report | Publication date | Patent family member(s) | Publication date |
|---|---|---|---|
| CN 102412548 B | 01-10-2014 | NONE | |
| US 2005195538 A1 | 08-09-2005 | NONE | |

EPO FORM P0459

For more details about this annex : see Official Journal of the European Patent Office, No. 12/82